(19) **Europäisches Patentamt / European Patent Office / Office européen des brevets**

(11) **EP 3 572 439 A1**

(12) **EUROPEAN PATENT APPLICATION**
published in accordance with Art. 153(4) EPC

(43) Date of publication:
27.11.2019 Bulletin 2019/48

(51) Int Cl.:
*C08F 2/44* (2006.01)          *C08F 265/04* (2006.01)
*C08F 289/00* (2006.01)

(21) Application number: 18741629.2

(22) Date of filing: 16.01.2018

(86) International application number:
PCT/JP2018/000993

(87) International publication number:
WO 2018/135481 (26.07.2018 Gazette 2018/30)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 23.01.2017 JP 2017009602

(71) Applicant: TECHNO-UMG CO., LTD.
Minato-ku
Tokyo 1050021 (JP)

(72) Inventor: IWANAGA, Takashi
Ube-shi
Yamaguchi 755-8580 (JP)

(74) Representative: Vossius & Partner
Patentanwälte Rechtsanwälte mbB
Siebertstrasse 3
81675 München (DE)

(54) **RUBBERY POLYMER, GRAFT COPOLYMER AND THERMOPLASTIC RESIN COMPOSITION**

(57)      Provided is a thermoplastic resin composition that has good moldability and is excellent in terms of impact resistance, low-temperature impact resistance, weather resistance, and the appearance of a molded article, the thermoplastic resin composition containing a graft copolymer produced using a rubbery polymer having a high gel content. Also provided is a molded article produced by molding the thermoplastic resin composition. A rubbery polymer (A) that is a product of polymerization of a raw material mixture containing an alkyl (meth)acrylate, a crosslinking agent (1) represented by Formula (1) below, and a hydrophobic substance. The amount of the hydrophobic substance is 0.1 to 10 parts by mass relative to 100 parts by mass of the total amount of the alkyl (meth)acrylate and the crosslinking agent (1). The rubbery polymer (A) has a gel content of 80% to 100%. A graft copolymer produced using the rubbery polymer and a thermoplastic resin composition.

$$CH_2=CR^1-CO-(X)-COCR^1=CH_2 \ldots \quad (1)$$

where X represents a diol residue selected from a polyalkylene glycol residue, a polyester diol residue, and a polycarbonate diol residue, and $R^1$ represents H or $CH_3$.

EP 3 572 439 A1

**Description**

Technical Field

The present invention relates to a rubbery polymer with which a graft copolymer that enables the production of a molded article having good moldability, excellent impact resistance, excellent low-temperature impact resistance, excellent weather resistance, and excellent appearance can be produced. The present invention relates to a graft copolymer produced using the rubbery polymer, a thermoplastic resin composition, and a molded article produced by molding the thermoplastic resin composition.

Background Art

Thermoplastic resins have been used in various fields, such as automotive, housing and construction materials, electrical and electronics, and OA equipment, such as printers. Among these, resins produced by mixing a styrene-acrylonitrile copolymer resin, an α-methylstyrene-acrylonitrile copolymer resin, a styrene-acrylonitrile-phenylmaleimide copolymer resin, or the like with a graft copolymer produced by graft polymerization of a monomer capable of imparting compatibility with the above resins onto a rubbery polymer, such as an ABS resin, an ASA resin or the like, have been widely used since they have excellent impact resistance and excellent flowability.

ASA resins, which are produced using a saturated rubber component, such as an alkyl (meth)acrylate rubber, as a rubbery polymer, have good weather resistance but are inferior to ABS resins in terms of impact resistance.

There have been proposed methods in which a polymeric crosslinking agent is used for improving the impact resistance of an ASA resin (PTLs 1 and 2).

In PTL 1, a polymeric crosslinking agent is added to a rubber phase. In PTL 1, polymerization is performed in two or more stages, and a polymeric crosslinking agent is used in or after the second stage. This is because, when a polymeric crosslinking agent, which has a high molecular weight, is used in the first stage, the polymeric crosslinking agent may fail to transition from oil droplets to micelles and the amount of aggregates may be increased accordingly. In the case where polymerization is performed in two or more stages as described above, furthermore, particles that do not contain a polymeric crosslinking agent may be formed. This reduces the gel content in the resulting rubbery polymer, which cannot improve impact resistance to a sufficient degree.

In PTL 2, as in PTL 1, the synthesis is performed by adding a monomer containing a polymeric crosslinking agent dropwise to seed particles that do not contain a polymeric crosslinking agent. As a result, particles that do not contain a polymeric crosslinking agent may be formed. Thus, it is not possible to improve impact resistance to a sufficient degree.

PTL 1: JP2012-144714A
PTL 2: JP5905115B

An object of the present invention is to provide a rubbery polymer with which a graft copolymer that has good moldability and enables the production of a molded article having excellent impact resistance, excellent low-temperature impact resistance, excellent weather resistance, and excellent appearance can be produced. Another object of the present invention is to provide a graft copolymer produced using the rubbery polymer, a thermoplastic resin composition, and a molded article produced by molding the thermoplastic resin composition.

Summary of Invention

The inventor of the present invention found that the above objects may be achieved by using a rubbery polymer (A) having a high gel content which is produced from an alkyl (meth)acrylate, a particular polymeric crosslinking agent, and a predetermined amount of hydrophobic substance and conceived the present invention.

Specifically, the summary of the present invention is as follows.

[1] A rubbery polymer (A) that is a product of polymerization of a raw material mixture containing an alkyl (meth)acrylate, a crosslinking agent represented by Formula (1) below (hereinafter, this crosslinking agent is referred to as "crosslinking agent (1)"), and a hydrophobic substance, the amount of the hydrophobic substance being 0.1 to 10 parts by mass relative to 100 parts by mass of the total amount of the alkyl (meth)acrylate and the crosslinking agent (1), the rubbery polymer (A) having a gel content of 80% to 100%,

$$CH_2=CR^1-CO-(X)-COCR^1=CH_2 \; ... \qquad (1)$$

wherein, in Formula (1), X represents at least one diol residue selected from a polyalkylene glycol residue, a polyester diol residue, and a polycarbonate diol residue; and $R^1$ represents H or $CH_3$.

[2] The rubbery polymer (A) described in [1], the rubbery polymer (A) having a volume-average particle size of 150 to 800 nm and a degree of swelling by acetone of 500% to 1200%.

[3] The rubbery polymer (A) described in [1] or [2], the rubbery polymer (A) being a product of polymerization of a miniemulsion containing the alkyl (meth)acrylate, the crosslinking agent, the hydrophobic substance, an oil-soluble initiator, an emulsifier, and water.

[4] A graft copolymer (B) that is a product of graft polymerization of at least one vinyl monomer (b) selected from the group consisting of an aromatic vinyl, an alkyl (meth)acrylate, and a vinyl cyanide onto the rubbery polymer (A) described in any of [1] to [3].

[5] A thermoplastic resin composition including the graft copolymer (B) described in [4].

[6] A molded article produced by molding the thermoplastic resin composition described in [5].

[7] A method for producing a rubbery polymer (A), the method including polymerizing a raw material mixture containing an alkyl (meth)acrylate, a crosslinking agent (1) represented by Formula (1) below, and a hydrophobic substance in order to produce a rubbery polymer (A) having a gel content of 80% to 100%, the amount of the hydrophobic substance being 0.1 to 10 parts by mass relative to 100 parts by mass of the total amount of the alkyl (meth)acrylate and the crosslinking agent (1),

$$CH_2=CR^1\text{-}CO\text{-}(X)\text{-}COCR^1=CH_2 \ ... \qquad (1)$$

wherein, in Formula (1), X represents at least one diol residue selected from a polyalkylene glycol residue, a polyester diol residue, and a polycarbonate diol residue; and $R^1$ represents H or $CH_3$.

[8] The method for producing a rubbery polymer (A) described in [7], wherein the rubbery polymer (A) has a volume-average particle size of 150 to 800 nm and a degree of swelling by acetone of 500% to 1200%.

[9] The method for producing a rubbery polymer (A) described in [7] or [8], wherein a mixture containing the alkyl (meth)acrylate, the crosslinking agent, the hydrophobic substance, an oil-soluble initiator, an emulsifier, and water is formed into a miniemulsion, and the miniemulsion is polymerized to form a rubbery polymer (A).

[10] A method for producing a graft copolymer (B), the method including graft-polymerizing at least one vinyl monomer (b) selected from the group consisting of an aromatic vinyl, an alkyl (meth)acrylate, and a vinyl cyanide onto a rubbery polymer (A) produced by the production method described in any of [7] to [9] in order to form a graft copolymer (B).

[11] A method for producing a thermoplastic resin composition, the method including using the graft copolymer (B) produced by the production method described in [10].

[12] A method for producing a molded article, the method including molding the thermoplastic resin composition produced by the production method described in [11]. Advantageous Effects of Invention

The rubbery polymer (A) and the graft copolymer (B) according to the present invention enable the production of a thermoplastic resin composition that has good moldability and is excellent in terms of impact resistance, low-temperature impact resistance, weather resistance, and the appearance of a molded article and a molded article composed of the thermoplastic resin composition.

Description of Embodiments

An embodiment of the present invention is described below in detail.

The term "unit" used herein refers to a structural element derived from a monomeric compound (monomer) present before polymerization. For example, the term "alkyl (meth)acrylate unit" refers to "structural element derived from an alkyl (meth)acrylate".

The term "(meth)acrylate" used herein refers to either or both "acrylate" and "methacrylate".

The term "molded article" used herein refers to an article produced by molding a thermoplastic resin composition.

The term "residue" used herein refers to a structural element that is derived from a compound used for producing a reaction product, such as a polymer, (in the present invention, the rubbery polymer (A) or the crosslinking agent (1) described below) and included in the reaction product. For example, the residue X described below corresponds to the group formed by removing one hydrogen atom from each of the two hydroxyl groups included in a polyalkylene glycol, a polyester diol, a polycarbonate diol, or one or more of these polymers.

[Rubbery Polymer (A)]

The rubbery polymer (A) according to the present invention is described below.

The rubbery polymer (A) according to the present invention is a product of polymerization of a raw material mixture containing an alkyl (meth)acrylate, a crosslinking agent represented by Formula (1) below (hereinafter, this crosslinking agent is referred to as "crosslinking agent (1)"), and a predetermined amount of hydrophobic substance. The rubbery polymer (A) has a gel content of 80% to 100%.

$$CH_2=CR^1\text{-}CO\text{-}(X)\text{-}COCR^1=CH_2 \ ... \quad (1)$$

In Formula (1), X represents at least one diol residue selected from a polyalkylene glycol residue, a polyester diol residue, and a polycarbonate diol residue; and $R^1$ represents H or $CH_3$.

The rubbery polymer (A) according to the present invention is produced by a miniemulsion polymerization method that includes a step in which a pre-emulsion is prepared from a raw material mixture containing an alkyl (meth)acrylate, the crosslinking agent (1), and a hydrophobic substance and preferably further containing an emulsifier or is more preferably prepared from a raw material mixture containing an alkyl (meth)acrylate, the crosslinking agent (1), a hydrophobic substance, an oil-soluble initiator, an emulsifier, and water and a step in which the pre-emulsion is polymerized.

A method for producing the rubbery polymer (A) according to the present invention by miniemulsion polymerization in which a pre-emulsion is prepared from a raw material mixture containing an alkyl (meth)acrylate, the crosslinking agent (1), a hydrophobic substance, an oil-soluble initiator, an emulsifier, and water and the pre-emulsion is polymerized is described below. The raw material mixture may further contain, as needed, other vinyl compounds capable of copolymerizing with the alkyl (meth)acrylate and the crosslinking agent (1).

In the miniemulsion polymerization, first, a large shear force is generated using an ultrasonic wave oscillator or the like in order to prepare monomer oil droplets having a size of about 100 to 1000 nm. In this stage, molecules of the emulsifier adsorb preferentially onto the surfaces of the monomer oil droplets, and the amounts of free emulsifier molecules and micelles present inside the water medium are reduced to a negligible degree. Thus, in an ideal miniemulsion polymerization, monomer radicals are not distributed into a water phase and an oil phase, and polymerization occurs while the monomer oil droplets serve as nuclei of particles. As a result, the monomer oil droplets are directly converted into polymer particles. This enables the production of homogeneous polymer nanoparticles.

In contrast, when polymer particles are prepared by common emulsion polymerization, the reaction occurs while the monomer droplets are converted into micelles. Therefore, in the case where the raw material mixture contains a plurality of monomers having different degrees of hydrophobicity, it becomes not possible to produce a uniform polymer because the likelihood of each of the monomers being converted into micelles differs from one another.

<Miniemulsion Polymerization>

The miniemulsion polymerization used for producing the rubbery polymer (A) according to the present invention is, for example, but not limited to, a method including a step in which an alkyl (meth)acrylate, the crosslinking agent (1), a hydrophobic substance, an emulsifier, and, preferably, an oil-soluble initiator and water are mixed with one another; a step in which the resulting mixture (hereinafter, may be referred to as "mixture (a)") is subjected to a shear force to form a pre-emulsion; and a step in which the pre-emulsion is heated to a polymerization initiation temperature to cause polymerization. In the miniemulsion formation step, after the monomers that are to be polymerized have been mixed with the emulsifier, a shearing step is conducted using, for example, ultrasonic irradiation. The shear force causes the monomers to tear and form monomer oil microdroplets covered with the emulsifier. Subsequently, heating is performed to the polymerization initiation temperature of the oil-soluble initiator in order to directly polymerize the monomer oil microdroplets. Hereby, high-molecular compound microparticles are produced. Publicly known methods may be used for generating the shear force used for forming the pre-emulsion.

Examples of a high-shear apparatus used for forming the pre-emulsion include, but are not limited to, an emulsification apparatus that includes a high-pressure pump and an interaction chamber; and an apparatus that uses ultrasonic energy or high frequency to form a miniemulsion. Examples of the emulsification apparatus that includes a high-pressure pump and an interaction chamber include "Pressure Homogenizer" produced by SPX Corporation APV and "Microfluidizer" produced by Powrex Corporation. Examples of the apparatus that uses ultrasonic energy or high frequency to form a miniemulsion include "Sonic Dismembrator" produced by Fisher Scient and "ULTRASONIC HOMOGENIZER" produced by NIHONSEIKI KAISHA LTD.

In order to enhance workability, stability, productivity, and the like, the amount of the aqueous solvent used for preparing the pre-emulsion is preferably set to about 100 to 500 parts by mass relative to 100 parts by mass of the amount of the mixture (a) excluding water such that the concentration of the solid component in the reaction system after polymerization is about 5% to 50% by mass.

<Alkyl (Meth)acrylate>

The alkyl (meth)acrylate constituting the rubbery polymer (A) according to the present invention is preferably an alkyl (meth)acrylate having 1 to 11 carbon atoms which may include a substituent group. Examples thereof include alkyl acrylates, such as methyl acrylate, ethyl acrylate, n-propyl acrylate, n-butyl acrylate, benzyl acrylate, and 2-ethylhexyl acrylate; and alkyl methacrylates, such as butyl methacrylate, hexyl methacrylate, and 2-ethylhexyl methacrylate. Among the above alkyl (meth)acrylates, n-butyl acrylate is preferably used in order to enhance the impact resistance of a molded article produced using the thermoplastic resin composition. The alkyl (meth)acrylates may be used alone or in combination of two or more.

The amount of the alkyl (meth)acrylate used is preferably 10% to 99.9% by mass, is particularly preferably 50% to 99.5% by mass, and is further preferably 70% to 99% by mass of the total amount of the alkyl (meth)acrylate, the crosslinking agent (1), and the other vinyl compounds described below, which may be used as needed. When the amount of the alkyl (meth)acrylate used falls within the above range, the thermoplastic resin composition, which contains the graft copolymer (B) produced using the resulting rubbery polymer (A), has excellent impact resistance and excellent weather resistance.

<Crosslinking Agent (1)>

In the production of the rubbery polymer (A) according to the present invention, the crosslinking agent (1) represented by Formula (1) below is used in combination with the alkyl (meth)acrylate in order to introduce a crosslinked structure to the polyalkyl (meth)acrylate component derived from the alkyl (meth)acrylate.

$$CH_2=CR^1-CO-(X)-COCR^1=CH_2 \ldots \qquad (1)$$

In Formula (1), X represents at least one diol residue selected from a polyalkylene glycol residue, a polyester diol residue, and a polycarbonate diol residue; and $R^1$ represents H or $CH_3$.

The two $R^1$ groups in Formula (1) may be identical to or different from each other.

Hereinafter, the group X in Formula (1) may be referred to as "diol residue X", and a diol compound that is used as a raw material for producing the crosslinking agent (1) and constitutes the diol residue X included in the crosslinking agent (1) may be referred to as "X source".

The structure of the diol residue X included in the crosslinking agent (1) may include repetitions of only one structural unit or repetitions of two or more structural units. In the case where the structure of X includes repetitions of two or more structural units, the structural units may be arranged such that the two or more structural units are present in a random manner, in blocks, or in an alternating manner.

The number-average molecular weight (Mn) of the diol residue X is preferably 300 to 10000, is more preferably 600 to 7000, and is further preferably 900 to 5000. When the number-average molecular weight (Mn) of the diol residue X is equal to or more than the lower limit, the thermoplastic resin composition, which contains the graft copolymer (B) produced using the rubbery polymer (A) according to the present invention which is produced using the crosslinking agent (1), has excellent impact resistance.

Specific examples of the crosslinking agent (1) include "NK ester 9G", "NK ester APG-700" (polypropylene glycol diacrylate, Mn of diol residue X: 696), "NK ester 14G" (polyethylene glycol dimethacrylate, Mn of diol residue X: 616), "NK ester 23G" (polyethylene glycol dimethacrylate, Mn of diol residue X: 1012), "NK ester BPE-100", "NK ester BPE-200", "NK ester BPE-500", "NK ester BPE-900", "NK ester BPE-1300N", "NK ester 1206PE", "NK ester A-400", "NK ester A-600" (polyethylene glycol diacrylate, Mn of diol residue X: 616), "NK ester A-1000" (polyethylene glycol diacrylate, Mn of diol residue X: 1012), "NK ester A-B1206PE", "NK ester ABE-300", "NK ester A-BPE-10", "NK ester A-BPE-20", "NK ester A-BPE-30", and "NK ester A-BPE-4" produced by Shin Nakamura Chemical Co., Ltd.; "BLEMMER PDE-400", "BLEMMER PDE-600" (polyethylene glycol dimethacrylate, Mn of diol residue X: 616), "BLEMMER PDP-400N", "BLEMMER PDP-700" (polypropylene glycol dimethacrylate, Mn of diol residue X: 696), "BLEMMER PDT-650" (polytetramethylene glycol dimethacrylate, Mn of diol residue X: 648), "BLEMMER 40PDC-1700" (polyethylene glycol-polypropylene glycol dimethacrylate random copolymer, Mn of diol residue X: 1704), "BLEMMER PDBE-200", "BLEMMER PDBE-250", "BLEMMER PDBE-450", "BLEMMER PDBE-1300", "BLEMMER PDBP-600", "BLEMMER ADE-400", "BLEMMER ADE-600" (polyethylene glycol diacrylate, Mn of diol residue X: 616), and "BLEMMER ADP-400" produced by NOF CORPORATION; "UH-100DA (polycarbonate diol diacrylate, Mn of diol residue X: 1000)" and "UH-100DM (polycarbonate diol dimethacrylate, Mn of diol residue X: 1000)" produced by Ube Industries, Ltd.; "ACRYESTER PBOM" (polybutylene glycol dimethacrylate, Mn of diol residue X: 648) produced by MITSUBISHI RAYON CO., LTD.; "LIGHT ESTER 9EG" and "LIGHT ESTER 14EG" produced by Kyoeisha Chemical Co., Ltd.; and "FANCRYL FA-321M" and "FANCRYL FA-023M" produced by Hitachi Chemical Co., Ltd. (the names listed above are all product names).

Examples of the method for producing the crosslinking agent (1) include, but are not limited to, a method in which the X source is reacted with (meth)acrylic acid in the presence of an acid catalyst to produce a (meth)acrylate ester precursor and the by-product water is discharged to the outside of the system (dehydration reaction); and a method in which the X source is reacted with a lower (meth)acrylate ester to produce a (meth)acrylate ester precursor and the by-product lower alcohol is removed (transesterification).

The above crosslinking agents (1) may be used alone or in a mixture of two or more.

The amount of the crosslinking agent (1) used is preferably 0.1% to 20% by mass, is particularly preferably 0.5% to 10% by mass, and is most preferably 1% to 5% by mass of the total amount of the alkyl (meth)acrylate, the crosslinking agent (1), and the other vinyl compounds described below, which may be used as needed. When the amount of the crosslinking agent (1) used falls within the above range, the thermoplastic resin composition, which contains the graft copolymer (B) produced using the resulting rubbery polymer (A), has excellent impact resistance.

<Other Vinyl Compounds>

The other vinyl compounds which may be used as needed are not limited and may be any vinyl compounds capable of copolymerizing with the alkyl (meth)acrylate and the crosslinking agent (1). Examples thereof include aromatic vinyls, such as styrene, $\alpha$-methylstyrene, o-, m-, or p-methylstyrene, vinylxylene, p-t-butylstyrene, and ethylstyrene; vinyl cyanides, such as acrylonitrile and methacrylonitrile; maleimides, such as N-cyclohexylmaleimide and N-phenylmaleimide; maleic anhydride; alkylene glycol di(meth)acrylates, such as ethylene glycol diacrylate, 1,3-butylene glycol diacrylate, 1,4-butylene glycol diacrylate, propylene glycol diacrylate, ethylene glycol dimethacrylate, 1,3-butylene glycol dimethacrylate, 1,4-butylene glycol dimethacrylate, and propylene glycol dimethacrylate; polyvinylbenzenes, such as divinylbenzene and trivinylbenzene; and allyl compounds, such as triallyl isocyanurate, triallyl cyanurate, trimethylolpropane diallyl ether, pentaerythritol triallyl ether, diallyldimethylammonium chloride, and allyl methacrylate. The above compounds may be used alone or in a mixture of two or more.

In the case where the other vinyl compounds are used, the amount of the other vinyl compounds used is preferably, but not limited to, 0% to 90% by mass, is particularly preferably 0.1% to 50% by mass, and is further preferably 0.3% to 30% by mass of the total amount of the alkyl (meth)acrylate, the crosslinking agent (1), and the other vinyl compounds.

<Hydrophobic Substance>

In the production of the rubbery polymer (A) according to the present invention, a hydrophobic substance is used at a predetermined proportion. Using a hydrophobic substance in the preparation of the pre-emulsion may enhance the production consistency of miniemulsion polymerization and enable the production of a rubbery polymer (A) having a high gel content.

Examples of the hydrophobic substance include a hydrocarbon having 10 or more carbon atoms, an alcohol having 10 or more carbon atoms, a hydrophobic polymer having a mass-average molecular weight (Mw) of less than 10000, and a hydrophobic monomer, such as a vinyl ester of an alcohol having 10 to 30 carbon atoms, a vinyl ether of an alcohol having 12 to 30 carbon atoms, an alkyl (meth)acrylate having 12 to 30 carbon atoms, a carboxylic acid vinyl ester having 10 to 30 carbon atoms (preferably having 10 to 22 carbon atoms), p-alkylstyrene, a hydrophobic chain-transfer agent, and a hydrophobic peroxide. The above hydrophobic substances may be used alone or in a mixture of two or more.

Specific examples of the hydrophobic substance include hexadecane, octadecane, icosane, liquid paraffin, liquid isoparaffin, a paraffin wax, a polyethylene wax, an olive oil, cetyl alcohol, stearyl alcohol, lauryl acrylate, stearyl acrylate, lauryl methacrylate, stearyl methacrylate, polystyrene and poly (meth)acrylate having a number-average molecular weight (Mn) of 500 to 10000, or the like.

The amount of the hydrophobic substance used in the present invention is 0.1 to 10 parts by mass and is preferably 1 to 3 parts by mass relative to 100 parts by mass of the total amount of the alkyl (meth)acrylate and the crosslinking agent (1) described above. If the amount of the hydrophobic substance used is less than 0.1 parts by mass, a large amount of aggregates may be formed when polymerization is performed, which degrades production consistency. Consequently, the thermoplastic resin composition, which contains the graft copolymer produced using the resulting rubbery polymer, may have poor impact resistance. If the amount of the hydrophobic substance used is more than 10 parts by mass, the thermoplastic resin composition may have poor weather resistance. This results in generation of a large amount of gas during molding and poor moldability.

<Emulsifier>

In the production of the rubbery polymer (A) according to the present invention, the following publicly known emulsifiers may be used: carboxylic acid emulsifiers, such as alkali metal salts of oleic acid, palmitic acid, stearic acid, and rosin acid and alkali metal salts of alkenylsuccinic acids; and anionic emulsifiers selected from an alkyl sulfate ester, sodium alkylbenzene sulfonate, sodium alkyl sulfosuccinate, polyoxyethylene nonyl phenyl ether sulfate ester sodium, and the like. The above emulsifiers may be used alone or in combination of two or more.

The amount of the emulsifier used is preferably 0.01 to 1.0 parts by mass and is further preferably 0.05 to 0.5 parts by mass relative to 100 parts by mass of the alkyl (meth)acrylate.

<Oil-Soluble Initiator>

The oil-soluble initiator is a radical polymerization initiator soluble in oils, that is, capable of dissolving in the alkyl (meth)acrylate and the crosslinking agent (1). Examples of the oil-soluble initiator include an azo polymerization initiator, a photopolymerization initiator, an inorganic peroxide, an organic peroxide, and a redox initiator that includes an organic peroxide, a transition metal, and a reductant. Among these, an azo polymerization initiator, an inorganic peroxide, an organic peroxide, and a redox initiator, which initiates polymerization upon being heated, are preferable. The above polymerization initiators may be used alone or in combination of two or more.

Examples of the azo polymerization initiator include 2,2'-azobis(4-methoxy-2,4-dimethylvaleronitrile), 2,2'-azobis(2,4-dimethylvaleronitrile), 2,2'-azobisisobutyronitrile, 2,2'-azobis(2-methylbutyronitrile), 1,1'-azobis(cyclohexane-1-carbonitrile), 1-[(1-cyano-1-methylethyl)azo]formamide, 4,4'-azobis(4-cyanovaleric acid), dimethyl 2,2'-azobis(2-methylpropionate), dimethyl 1,1'-azobis(1-cyclohexanecarboxylate), 2,2'-azobis[2-methyl-N-(2-hydroxyethyl)propionamide], 2,2'-azobis(N-butyl-2-methylpropionamide), 2,2'-azobis(N-cyclohexyl-2-methylpropionamide), 2,2'-azobis[2-(2-imidazolin-2-yl)propane], and 2,2'-azobis(2,4,4-trimethylpentane).

Examples of the inorganic peroxide include potassium persulfate, sodium persulfate, ammonium persulfate, and hydrogen peroxide.

Examples of the organic peroxide include peroxy esters. Specific examples thereof include $\alpha,\alpha'$-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneodecanoate, t-hexyl peroxypivalate, t-butyl peroxypivalate, 1,1,3,3-tetramethylbutyl peroxy-2-ethylhexanoate, 2,5-dimethyl-2,5-bis(2-ethylhexanoyl peroxy)hexane, 1-cyclohexyl-1-methylethyl peroxy-2-ethylhexanoate, t-hexyl peroxy 2-hexylhexanoate, t-butyl peroxy 2-hexylhexanoate, t-butyl peroxyisobutyrate, t-hexyl peroxy isopropyl monocarbonate, t-butyl peroxymaleic acid, t-butyl peroxy 3,5,5-trimethylhexanoate, t-butyl peroxylaurate, 2,5-dimethyl-2,5-bis(m-toluoyl peroxy)hexane, t-butyl peroxy isopropyl monocarbonate, t-butyl peroxy 2-ethylhexyl monocarbonate, t-hexyl peroxybenzoate, 2,5-dimethyl-2,5-bis(benzoyl peroxy)hexane, t-butyl peroxyacetate, t-butyl peroxy-m-toluoyl benzoate, t-butyl peroxybenzoate, bis(t-butylperoxy)isophthalate, 1,1-bis(t-hexylperoxy)3,3,5-trimethylcyclohexane, 1,1-bis(t-hexylperoxy)cyclohexane, 1,1-bis(t-butylperoxy)3,3,5-trimethylcyclohexane, 1,1-bis(t-butylperoxy)cyclohexane, 1,1-bis(t-butylperoxy)cyclododecane, 2,2-bis(t-butylperoxy)butane, n-butyl 4,4-bis(t-butylperoxy)valerate, 2,2-bis(4,4-di-t-butylperoxycyclohexyl)propane, $\alpha,\alpha'$-bis(t-butylperoxide)diisopropylbenzene, dicumyl peroxide, 2,5-dimethyl-2,5-bis(t-butylperoxy)hexane, t-butyl cumyl peroxide, di-t-butyl peroxide, cumene hydroperoxide, diisopropylbenzene hydroperoxide, dilauroyl peroxide, diisononanoyl peroxide, t-butyl hydroperoxide, benzoyl peroxide, lauroyl peroxide, dimethyl bis(t-butylperoxy)-3-hexyne, bis(t-butylperoxy isopropyl)benzene, bis(t-butylperoxy)trimethylcyclohexane, butyl-bis(t-butylperoxy)valerate, t-butyl 2-ethylhexane peroxide, dibenzoyl peroxide, para-menthane hydroperoxide, and t-butyl peroxybenzoate.

The redox initiator preferably includes an organic peroxide, ferrous sulfate, a chelating agent, and a reductant. Examples of such a redox initiator include a redox initiator including cumene hydroperoxide, ferrous sulfate, sodium pyrophosphate, and dextrose; and a redox initiator including t-butyl hydroperoxide, sodium formaldehyde sulfoxylate (Rongalite), ferrous sulfate, and disodium ethylenediaminetetraacetate.

Among the above oil-soluble initiators, an organic peroxide is particularly preferable.

The amount of the oil-soluble initiator used is normally 5 parts by mass or less, is preferably 3 parts by mass or less, and is, for example, 0.001 to 3 parts by mass relative to 100 parts by mass of the alkyl (meth)acrylate.

The oil-soluble initiator may be used either before or after the formation of the pre-emulsion. The oil-soluble initiator may be used at a time, in batches, or on a continuous basis.

<Rubber Component>

In the production of the rubbery polymer (A) according to the present invention, a rubbery polymer (A) composed of a rubber composite which is produced by further using another rubber component in the pre-emulsion preparation step may be produced such that the intended properties are not impaired. Examples of the other rubber component include a diene rubber, such as polybutadiene, and polyorganosiloxane. Polymerization of the alkyl (meth)acrylate in the presence of the above rubber components produces a rubbery polymer (A) composed of a diene/alkyl (meth)acrylate rubber composite or polyorganosiloxane/alkyl (meth)acrylate rubber composite which contains an alkyl (meth)acrylate rubber, such as a butyl acrylic rubber.

The rubber composite according to the present invention is not limited to this. The rubber components for the rubber composite may be used alone or in combination of two or more.

<Reaction Conditions>

The above pre-emulsion preparation step is normally conducted at normal temperature (about 10°C to 50°C). The miniemulsion polymerization step is conducted at 40°C to 100°C for about 30 to 600 minutes.

<Gel Content>

The gel content in the rubbery polymer (A) according to the present invention is 80% or more, is preferably 85% or more, and is further preferably 90% to 100%. The gel content in the rubbery polymer (A) is determined by the following method.
A latex of the rubbery polymer (A) is solidified and dried to produce a polymer. About 1 g ($W_0$) of the polymer is accurately weighed and immersed in about 50 g of acetone at 23°C for 48 hours in order to swell the polymer. Subsequently, the acetone is removed by decantation. The swollen polymer is accurately weighed ($W_s$) and then dried under reduced pressure at 80°C for 24 hours in order to remove acetone absorbed by the polymer by evaporation. Subsequently, the polymer is accurately weighed again ($W_d$). The gel content is calculated using the following formula.

$$Gel\ Content\ (\%)\ =\ W_d/W_0\ \times\ 100$$

where $W_d$ is the weight of the dried polymer and $W_0$ is the weight of the polymer measured before the polymer is immersed in acetone.
When the gel content in the rubbery polymer (A) is 80% or more, the thermoplastic resin composition, which contains the graft copolymer (B) produced using the rubbery polymer (A), has excellent impact resistance.

<Degree of Swelling by Acetone>

The degree of swelling by acetone of the rubbery polymer (A) according to the present invention is preferably 500% to 1200%, is more preferably 600% to 1000%, and is further preferably 700% to 900%. The degree of swelling by acetone of the rubbery polymer (A) is determined by the following method.
The test is conducted as in the measurement of gel content described above. The degree of swelling is calculated using the following formula.

$$Degree\ of\ swelling\ (\%)\ =\ (W_S\ -\ W_d)/W_d\ \times\ 100$$

where $W_S$ is the weight of the swollen polymer and $W_d$ is the weight of the dried polymer.
When the degree of swelling of the rubbery polymer (A) falls within the above range, the thermoplastic resin composition, which contains the graft copolymer (B) produced using the rubbery polymer (A), has further excellent impact resistance.

<Particle Size>

The volume-average particle size of the rubbery polymer (A) according to the present invention is preferably 150 to 800 nm, is more preferably 200 to 500 nm, and is further preferably 250 to 400 nm. When the volume-average particle size of the rubbery polymer (A) falls within the above range, the amount of aggregates formed when polymerization is performed is small and, consequently, the thermoplastic resin composition, which contains the graft copolymer (B) produced using the rubbery polymer (A), has further excellent impact resistance.
The particle size of the rubbery polymer (A) according to the present invention preferably satisfies the following condition (1) or (2) in order to enhance the impact resistance and appearance of the resulting molded article, where X represents the volume-average particle size (X) of the rubbery polymer (A), Y represents a frequency upper limit 10%-volume particle size (Y) that is the particle size of the rubbery polymer (A) at which the cumulative frequency calculated using the particle size distribution curve from the upper limit reaches 10%, and Z represents a frequency lower limit 10%-volume particle size (Z) that is the particle size of the rubbery polymer (A) at which the cumulative frequency calculated using the particle size distribution curve from the lower limit reaches 10%.

(1) the volume-average particle size (X) satisfies X ≤ 300 nm, the frequency upper limit 10%-volume particle size (Y) satisfies Y ≤ 1.6 X, and the frequency lower limit 10%-volume particle size (Z) satisfies Z ≥ 0.5 X

(2) the volume-average particle size (X) satisfies X = 300 to 1000 nm, the frequency upper limit 10%-volume particle size (Y) satisfies Y ≤ 1.8 X, and the frequency lower limit 10%-volume particle size (Z) satisfies Z ≥ 0.4 X.

The volume-average particle size and particle size distribution of the rubbery polymer (A) according to the present invention are measured by the method described in Examples below.

[Graft Copolymer (B)]

The graft copolymer (B) according to the present invention is produced by graft polymerization of at least one vinyl monomer (b) selected from an aromatic vinyl, an alkyl (meth)acrylate, and a vinyl cyanide onto the rubbery polymer (A) according to the present invention which is produced by the above-described method.

The graft copolymer (B) includes the rubbery polymer (A) according to the present invention and a graft layer disposed on the rubbery polymer (A), the graft layer being a product of polymerization of the vinyl monomer (b). The graft layer constituting the graft copolymer (B) according to the present invention is formed as a result of a part or the entirety of the vinyl monomer (b) chemically and/or physically binding to the rubbery polymer (A).

The graft ratio of the graft layer of the graft copolymer (B) is calculated by the following method.

<Calculation of Graft Ratio>

To 2.5 g of the graft copolymer (B), 80 mL of acetone is added. The resulting mixture is heated to reflux for 3 hours in a hot-water bath at 65°C in order to extract a component soluble in acetone. The remaining substance insoluble in acetone is separated by centrifugation. After the substance has been dried, the mass of the substance is measured. The mass proportion of the substance insoluble in acetone to the graft copolymer (B) is calculated. The graft ratio is calculated from the mass proportion of the substance insoluble in acetone to the graft copolymer (B) using the following formula.

[Math. 1]

$$\text{Graft ratio (\%)} = \frac{\text{Mass proportion of substance insoluble in acetone} - \text{Mass proportion of rubbery polymer}}{\text{Mass proportion of rubbery polymer}} \times 100$$

The graft ratio of the graft copolymer (B) according to the present invention is preferably 10% to 90% and is particularly preferably 30% to 85%. When the graft ratio of the graft copolymer (B) falls within the above range, a molded article produced using the graft copolymer (B) has good impact resistance and good appearance.

The graft layer constituting the graft copolymer (B) may contain a vinyl monomer other than an aromatic vinyl, an alkyl (meth)acrylate, or a vinyl cyanide. The other vinyl monomer is, for example, one or more vinyl compounds selected from the above-described examples of the other vinyl compounds that may be used as needed in the production of the rubbery polymer (A) according to the present invention which are other than an aromatic vinyl or a vinyl cyanide.

It is preferable to use a mixture of an aromatic vinyl, which is preferably styrene, with a vinyl cyanide, which is preferably acrylonitrile, as a vinyl monomer (b) that constitutes the graft layer in order to enhance the thermal stability of the graft copolymer (B). In such a case, the ratio between the aromatic vinyl, such as styrene, to the vinyl cyanide, such as acrylonitrile, is preferably such that the amount of vinyl cyanide is 10% to 50% by mass relative to 50% to 90% by mass of aromatic vinyl (where the total amount of aromatic vinyl and vinyl cyanide is 100% by mass).

It is preferable to produce the graft layer of the graft copolymer (B) by emulsification graft polymerization of 90% to 10% by mass of the vinyl monomer (b) onto 10% to 90% by mass of the rubbery polymer (A) in order to enhance the appearance of a molded article produced using the graft copolymer (B) (where the total amount of the rubbery polymer (A) and the vinyl monomer (b) is 100% by mass). The above proportions are further preferably such that the amount of rubbery polymer (A) is 30% to 70% by mass and the amount of vinyl monomer (b) is 70% to 30% by mass.

The graft polymerization of the vinyl monomer (b) onto the rubbery polymer (A) can be performed by, for example, adding the vinyl monomer (b) to a latex of the rubbery polymer (A) which is prepared by miniemulsion polymerization and causing polymerization in one or more stages. In the case where the polymerization is performed in two or more stages, it is preferable to cause the polymerization by using the vinyl monomer (b) in batches or on a continuous basis in the presence of a rubber latex of the rubbery polymer (A). This polymerization method enhances polymerization stability and enables a latex having the intended particle size and the intended particle size distribution to be produced with consistency. Examples of a polymerization initiator used for the graft polymerization are the same as the above-described examples of the oil-soluble initiator used for the miniemulsion polymerization of the alkyl (meth)acrylate.

When the rubbery polymer (A) is polymerized with the vinyl monomer (b), an emulsifier may be used for stabilizing the latex of the rubbery polymer (A) and controlling the average particle size of the graft copolymer (B). Examples of the emulsifier are the same as, but not limited to, the above-described examples of the emulsifier used for the miniemulsion polymerization of the alkyl (meth)acrylate. An anionic emulsifier and a nonionic emulsifier are preferable. The amount of the emulsifier used in the graft polymerization of the vinyl monomer (b) onto the rubbery polymer (A) is preferably, but not limited to, 0.1 to 10 parts by mass and is more preferably 0.2 to 5 parts by mass relative to 100 parts by mass of the graft copolymer (B).

For recovering the graft copolymer (B) from a latex of the graft copolymer (B) produced by emulsion polymerization, for example, the following method may be used. However, the method for recovering the graft copolymer (B) from the latex of the graft copolymer (B) is not limited to the following method.

In order to solidify the graft copolymer (B), the latex of the graft copolymer (B) is charged into hot water in which a coagulant is dissolved. The solidified graft copolymer (B) is again dispersed in water or warm water to form a slurry in order to wash the graft copolymer (B) by dissolving the emulsifier residue remaining in the graft copolymer (B) in water. The slurry is then dehydrated with a dehydrator or the like. The resulting solid is dried with a flash dryer or the like. Thus, the graft copolymer (B) is recovered in a powder or particulate form.

Examples of the coagulant include inorganic acids (e.g., sulfuric acid, hydrochloric acid, phosphoric acid, and nitric acid) and metal salts (calcium chloride, calcium acetate, and aluminum sulfate). The type of the coagulant may be selected appropriately in accordance with the type of the emulsifier used. For example, in the case where only a carboxylate salt (e.g., a fatty acid salt or a rosin acid soap) is used as an emulsifier, any type of coagulant may be used. In the case where an emulsifier having a consistent emulsifying capacity even in an acidic region, such as sodium alkylbenzene sulfonate, is used, it is not sufficient to use an inorganic acid; it is necessary to use a metal salt.

The volume-average particle size of the graft copolymer (B) according to the present invention, which is produced using the rubbery polymer (A) according to the present invention in the above-described manner, is normally less than 1000 nm. The volume-average particle size of the graft copolymer (B) according to the present invention is determined by the method described in Examples below.

[Thermoplastic Resin Composition]

The thermoplastic resin composition according to the present invention contains the above-described graft copolymer (B) according to the present invention. The thermoplastic resin composition according to the present invention is normally produced by mixing the graft copolymer (B) according to the present invention with other thermoplastic resins. The amount of the graft copolymer (B) is preferably 20 to 60 parts by mass relative to 100 parts by mass of the thermoplastic resin composition according to the present invention. If the amount of the graft copolymer (B) included in the thermoplastic resin composition is less than 20 parts by mass, the rubber content becomes low and the impact resistance of the resulting molded article may become degraded. If the amount of the graft copolymer (B) included in the thermoplastic resin composition is more than 60 parts by mass, flowability may become degraded.

In order to enhance flowability and the impact resistance and other physical properties of the molded article in a balanced manner, the amount of the graft copolymer (B) is more preferably 30 to 40 parts by mass relative to 100 parts by mass of the thermoplastic resin composition according to the present invention.

The thermoplastic resin composition according to the present invention may further contain other thermoplastic resins and additives as needed.

Examples of the other thermoplastic resins include polyvinyl chloride, polystyrene, an acrylonitrile-styrene copolymer, an acrylonitrile-styrene-methyl methacrylate copolymer, a styrene-acrylonitrile-N-phenylmaleimide copolymer, an α-methylstyrene-acrylonitrile copolymer, polymethyl methacrylate, a methyl methacrylate-styrene copolymer, a methyl methacrylate-N-phenylmaleimide copolymer, polycarbonate, polyamide, polyester such as polyethylene terephthalate, polybutylene terephthalate, and polyphenylene ether-polystyrene complexes. The above thermoplastic resins may be used alone or in combination of two or more. Among these, an acrylonitrile-styrene copolymer is preferable in terms of impact resistance and flowability.

Examples of the additives include colorants, such as a pigment and a dye, fillers (e.g., carbon black, silica, and titanium oxide), a flame retardant, a stabilizer, a reinforcing agent, a processing aid, a heat-resisting agent, an antioxidant, a weathering agent, a mold release agent, a plasticizer, and an antistatic agent.

The thermoplastic resin composition according to the present invention is produced by mixing the graft copolymer (B) with the other thermoplastic resins and additives as needed using a V-blender, a Henschel mixer, or the like to form a dispersion mixture and melt-kneading the mixture with a kneading machine, such as an extruder, a Banbury mixer, a pressure kneader, or a roller.

The order in which the above components are mixed is not limited; the above components may be mixed in any order such that a uniform mixture is prepared.

[Molded Article]

The molded article according to the present invention is produced by molding the thermoplastic resin composition according to the present invention. The molded article according to the present invention has excellent impact resistance, excellent low-temperature impact resistance, excellent weather resistance, and excellent appearance.

Examples of the method for molding the thermoplastic resin composition according to the present invention include injection molding, an injection compression molding, an extrusion method, blow molding, vacuum molding, compressed-air molding, calender molding, and inflation molding. Among these, injection molding and injection compression molding are preferable because they are excellent in terms of mass productivity and enable a molded article to be produced with high dimensional accuracy.

The molded article according to the present invention, which is produced by molding the thermoplastic resin composition according to the present invention, is suitable for automotive interior and exterior parts, OA equipment, construction materials, and the like because it has excellent impact resistance, excellent low-temperature impact resistance, excellent weather resistance, and excellent appearance.

Examples of industrial application of the molded article according to the present invention, which is produced by molding the thermoplastic resin composition according to the present invention, include automotive parts, in particular, various types of exterior and interior paintless parts, construction materials, such as a wall material and a window frame material, tableware, toys, household appliance components, such as a cleaning machine housing, a television housing, and an air conditioner housing, interior members, ship members, and a data communication equipment housing.

EXAMPLES

The present invention is described below further specifically with reference to Examples and Comparative examples below. The present invention is not limited to Examples below without departing from the scope of the present invention.

Hereinafter, the expression "part" means "part by mass", and the expression "%" means "% by mass".

[Measurement of Volume-Average Particle Size]

The volume-average particle sizes of the rubbery polymers (A-1) to (A-21) and the graft copolymers (B-1) to (B-21) prepared in Examples and Comparative examples were measured by dynamic light scattering with Nanotrac UPA-EX150 produced by Nikkiso Co., Ltd.

The particle size distribution of each of the above samples was also determined by the same method as described above. The particle size corresponding to frequency upper limit 10% was determined as a frequency upper limit 10% particle size (Y). The particle size corresponding to frequency lower limit 10% was determined as a frequency lower limit 10% particle size (Z). The ratios of the frequency upper limit 10% particle size (Y) and the frequency lower limit 10% particle size (Z) to the volume-average particle size (X) were calculated.

[Measurement of Aggregate Content]

Latexes of the rubbery polymers (A-1) to (A-21) and the graft copolymers (B-1) to (B-21) prepared in Examples and Comparative examples were filtered through 100-mesh metal screens. The aggregates that remained on the 100-mesh metal screens were dried and subsequently weighed. The proportions (mass%) of the aggregates to the rubbery polymers (A-1) to (A-21) and the graft copolymers (B-1) to (B-21) were calculated. The lower the aggregate contents, the higher the production consistencies of the latexes of the rubbery polymers (A-1) to (A-21) and the graft copolymers (B-1) to (B-21).

[Production of Rubbery Polymers]

<Example 1-1: Production of Rubbery Polymer (A-1)>

The rubbery polymer (A-1) was prepared with the following formulation.

[Formulation]

| | |
|---|---|
| n-Butyl acrylate (BA) | 98.0 parts |
| UH-100DM | 2.0 parts |
| Allyl methacrylate (AMA) | 0.4 parts |
| Liquid paraffin (LP) | 0.5 parts |
| Dipotassium alkenylsuccinate (ASK) | 0.2 parts |
| Dilauroyl peroxide | 0.6 parts |
| Distilled water | 406 parts |

Into a reaction container equipped with a reagent injection container, a cooling tube, a jacketed heater, and a stirring device, distilled water, n-butyl acrylate, UH-100DM (polycarbonate diol dimethacrylate produced by Ube Industries, Ltd., Mn of diol residue X: 1000), liquid paraffin, allyl methacrylate, dipotassium alkenylsuccinate, and dilauroyl peroxide were charged. The resulting mixture was subjected to ultrasonication using ULTRASONIC HOMOGENIZER US-600 produced by Nissei Corporation with an amplitude of 35 $\mu$m for 20 minutes at normal temperature to form a pre-emulsion. The latex had a volume-average particle size of 560 nm.

The pre-emulsion was heated to 60°C in order to initiate radical polymerization. The liquid temperature was increased to 78°C as a result of the polymerization of the acrylate component. The temperature was maintained to be 75°C for 30 minutes in order to complete the polymerization of the acrylate component. The amount of time required for production was 90 minutes. Hereby, a latex of a rubbery polymer (A-1) which had a solid content of 18.3%, an aggregate content of 1.3%, and a volume-average particle size (X) of 560 nm was prepared.

<Examples 1-2 to 1-17 and Comparative Examples I-1 to 1-3: Production of Rubbery Polymers (A-2) to (A-20)>

Latexes of rubbery polymers (A-2) to (A-20) were prepared as in Example I-1, except that the contents of the alkyl (meth)acrylate, the crosslinking agent (1), the hydrophobic substance, and the emulsifier and the type of the crosslinking agent (1) were changed as described in Tables 1 to 4 (Tables 1A to 4A).

Note that "PBOM" in Crosslinking agent (1) refers to "ACRYESTER PBOM" (polybutylene glycol dimethacrylate, Mn of diol residue X: 648) produced by MITSUBISHI RAYON CO., LTD.

<Comparative Example 1-4: Production of Rubbery Polymer (A-21)>

The rubbery polymer (A-21) was prepared with the following formulation.

[Formulation]

| | |
|---|---|
| n-Butyl acrylate | 98.0 parts |
| UH-100DM | 2.0 parts |
| Allyl methacrylate | 0.4 parts |
| t-Butyl hydroperoxide | 0.25 parts |
| Ferrous sulfate | 0.0002 parts |
| Sodium formaldehydesulfoxylate | 0.33 parts |
| Disodium ethylenediaminetetraacetate | 0.0004 parts |
| Dipotassium alkenylsuccinate | 1.0 parts |
| Distilled water | 406 parts |

Into a nitrogen-purged reaction container equipped with a reagent injection container, a cooling tube, a jacketed heater, and a stirring device, 100 parts of distilled water, 0.05 parts of dipotassium alkenylsuccinate, 5 parts of n-butyl acrylate, 0.02 parts of allyl methacrylate, and 0.05 parts of t-butyl hydroperoxide were charged. After the resulting mixture had been heated to 60°C, ferrous sulfate, sodium formaldehydesulfoxylate, and disodium ethylenediaminetetraacetate were added to the mixture. Then, the reaction was performed for 60 minutes. Subsequently, a liquid mixture of 306 parts of distilled water, 93 parts of n-butyl acrylate, 2.0 parts of UH-100DM, 0.35 parts of allyl methacrylate, and 0.2 parts of t-butyl hydroperoxide was added dropwise to the mixture over 300 minutes. After the addition of the liquid mixture had been finished, the temperature was maintained to be 75°C for 30 minutes in order to complete the polymerization of the acrylate component. Hereby, a latex of a rubbery polymer (A-21) was prepared. The amount of time required for production was 420 minutes. The rubbery polymer (A-21) included in the latex had a solid content of 19.1%, an aggregate content of 0.5%, and a volume-average particle size (X) of 270 nm.

Tables 1 to 4 (Tables 1A to 4A) summarize the evaluation results of the rubbery polymers (A-1) to (A-21).

[Production and Evaluation of Graft Copolymers]

<Example II-1: Production of Graft Copolymer (B-1)>

Into a reaction container equipped with a reagent injection container, a cooling tube, a jacketed heater, and a stirring device, raw materials were charged with the following formulation. After the reaction container had been purged with nitrogen to a sufficient degree, the internal temperature was increased to 70°C while stirring was performed.

[Formulation]

| | |
|---|---|
| Water (including water contained in the latex of a rubbery polymer) | 230 parts |
| Latex of the rubbery polymer (A-1) | 50 parts (in terms of solid content) |
| Dipotassium alkenylsuccinate | 0.5 parts |
| Sodium formaldehydesulfoxylate | 0.3 parts |
| Ferrous sulfate | 0.001 parts |
| Disodium ethylenediaminetetraacetate | 0.003 parts |

Subsequently, while a liquid mixture containing acrylonitrile (AN), styrene (ST), and t-butyl hydroperoxide with the following formulation was added dropwise to the reaction container over 100 minutes, the temperature was increased to 80°C.

[Formulation]

| | |
|---|---|
| Acrylonitrile (AN) | 12.5 parts |
| Styrene (ST) | 37.5 parts |
| t-Butyl hydroperoxide | 0.2 parts |

After the addition of the liquid mixture had been finished, the temperature was maintained to be 80°C for 30 minutes. Subsequently, cooling was performed. Hereby, a latex of a graft copolymer (B-1) was prepared. The graft copolymer (B-1) included in the latex had a solid content of 29.7%, an aggregate content of 1.0%, a volume-average particle size of 580 nm, and a graft ratio of 47%.

Subsequently, 100 parts of a 1.5% aqueous sulfuric acid solution was heated to 80°C. While the aqueous solution was stirred, 100 parts of the latex of the graft copolymer (B-1) was gradually added dropwise to the aqueous solution in order to solidify the graft copolymer (B-1). Then, the temperature was increased to 95°C and held for 10 minutes.

The resulting solid was dehydrated, washed, and dried to form a powder of the graft copolymer (B-1).

<Examples II-2 to 11-17 and Comparative Examples II-1 to II-4: Production of Graft Copolymers (B-2) to (B-21)>

Graft copolymers (B-2) to (B-21) were prepared as in Example II-1, except that the latexes of the rubbery polymers (A-2) to (A-21) were used, respectively, instead of the latex of the rubbery polymer (A-1). Tables 1 to 4 (Tables 1B to 4B) summarize the volume-average particle size, the aggregate content, and the graft ratio of each of the graft copolymers (B-2) to (B-21).

The abbreviations used in Tables 1 to 4 refer to the following compounds.

BA: n-Butyl acrylate

UH-100: Polycarbonate diol dimethacrylate "UH-100DM" produced by Ube Industries, Ltd.

PBOM: Polybutylene glycol dimethacrylate "ACRYESTER PBOM" produced by MITSUBISHI RAYON CO., LTD.

AMA: Allyl methacrylate

LP: Liquid paraffin

ASK: Dipotassium alkenylsuccinate

ST: Styrene

AN: Acrylonitrile

<Production of Thermoplastic Resin Composition>

With 30 parts of a specific one of the graft copolymers (B-1) to (B-21), 70 parts of an acrylonitrile-styrene copolymer ("UMG AXS RESIN S102N" produced by UMG ABS, LTD.) produced by suspension polymerization was mixed with a Henschel mixer. The resulting mixture was fed to an extruder heated at 240°C and kneaded to form a pellet.

<Preparation of Test Specimen>

The pellet of the thermoplastic resin composition was molded using a 4-ounce injection molding machine (produced by The Japan Steel Works, LTD.) with a cylinder temperature of 240°C, a metal die temperature of 60°C, and an injection rate of 20 g/second to form a rod-like molded body 1 having a length of 80 mm, a width of 10 mm, and a thickness of 4 mm.

In the same manner as above, the pellet of the thermoplastic resin composition was molded with a cylinder temperature of 240°C, a metal die temperature of 60°C, and an injection rate of 20 g/second to form a plate-like molded body 2 having a length of 100 mm, a width of 100 mm, and a thickness of 2 mm.

<Evaluations>

Measurement of Charpy Impact Strength

The Charpy impact strength of the molded body 1 was measured in accordance with ISO 179 in 23°C and -30°C atmospheres.

Measurement of Melt Volume Rate (MVR)

The MVR of the pellet of the thermoplastic resin composition was measured in accordance with ISO 1133 at 220°C-98N. MVR is a measure of the flowability of the thermoplastic resin composition.

Appearance of Molded Body

Five molded bodies 2 were visually inspected with an optical microscope (magnification: 200 times). The total number of aggregates having a size of 100 $\mu$m or more was counted and evaluated in accordance with the following criteria. A molded body evaluated as "B" or "A" was considered having good appearance.

A: The number of aggregates having a size of 100 $\mu$m or more is 0 to 5

B: The number of aggregates having a size of 100 $\mu$m or more is 6 to 13

C: The number of aggregates having a size of 100 $\mu$m or more is 14 to 20

D: The number of aggregates having a size of 100 $\mu$m or more is 21 or more

Weather Resistance

The molded body 2 was subjected to Sunshine Weather Meter (produced by Suga Test Instruments Co., Ltd.) for 1000 hours with a black panel temperature of 63°C and a cycle condition of 60 minutes (rainfall: 12 minutes). The degree (ΔE) of discoloration of the molded body 2 which occurred during the treatment was measured with a color-difference meter and evaluated.

The smaller the ΔE value, the higher the weather resistance. A sample evaluated as "B" or "A" was considered having good weather resistance.

A: ΔE was 0 or more and less than 1; discoloration of the molded article was not confirmed, and the visual appearance of the molded article was not impaired.
B: ΔE was 1 or more and less than 3; discoloration of the molded article was negligible, and the visual appearance of the molded article was not impaired.
C: ΔE was 5 or more and less than 10; slight discoloration of the molded article was confirmed, and the visual appearance of the molded article was impaired.
D: ΔE was 10 or more; significant discoloration of the molded article was confirmed, and the visual appearance of the molded article was impaired.

Tables 1 to 4 (Tables 1B to 4B) summarize the results of the above evaluations.

[Table 1]

<Table 1A>

| | | | Examples | | | | | |
|---|---|---|---|---|---|---|---|---|
| | | | I-1 | I-2 | I-3 | I-4 | I-5 | I-6 |
| Rubbery polymer (A) | | | A-1 | A-2 | A-3 | A-4 | A-5 | A-6 |
| Rubbery polymer (A) | Raw material formulation (part) | Alkyl (meth)acrylate | BA | 97.6 | 97.6 | 97.6 | 97.6 | 97.6 | 97.6 |
| | | Crosslinking agent (1) | UH-100 | 2.0 | 2.0 | 2.0 | 2.0 | 2.0 | 2.0 |
| | | | PBOM | | | | | | |
| | | Other vinyl compound | AMA | 0.4 | 0.4 | 0.4 | 0.4 | 0.4 | 0.4 |
| | | Hydrophobic substance | LP | 0.5 | 2.0 | 5.0 | 9.0 | 2.0 | 2.0 |
| | | Emulsifier | ASK | 0.2 | 0.2 | 0.2 | 0.2 | 1.2 | 1.0 |
| | Evaluation results | Aggregate content (%) | | 1.3 | 0.1 | 0.1 | 0.1 | 0.1 | 0.1 |
| | | Volume-average particle size (X) (nm) | | 560 | 320 | 280 | 270 | 120 | 180 |
| | | Frequency upper limit 10%-volume particle size (Y) (nm) | | 920 | 510 | 440 | 400 | 150 | 250 |
| | | Frequency lower limit 10%-volume particle size (Z) (nm) | | 280 | 160 | 140 | 160 | 100 | 140 |
| | | Degree of swelling by acetone (%) | | 1020 | 760 | 760 | 760 | 760 | 770 |
| | | Gel content (%) | | 83 | 96 | 96 | 96 | 96 | 96 |

<Table 1B>

|  |  |  |  | Examples |  |  |  |  |  |
|---|---|---|---|---|---|---|---|---|---|
|  |  |  |  | II-1 | II-2 | II-3 | II-4 | II-5 | II-6 |
|  |  | Graft copolymer (B) |  | B-1 | B-2 | B-3 | B-4 | B-5 | B-6 |
| Graft copolymer (B) | Raw material formulation (part) | Rubbery polymer (A) |  | 50 | 50 | 50 | 50 | 50 | 50 |
|  |  | Aromatic vinyl | ST | 37.5 | 37.5 | 37.5 | 37.5 | 37.5 | 37.5 |
|  |  | Vinyl cyanide | AN | 12.5 | 12.5 | 12.5 | 12.5 | 12.5 | 12.5 |
|  | Evaluation results | Aggregate content (%) |  | 1.0 | 0.1 | 0.1 | 0.1 | 0.1 | 0.1 |
|  |  | Volume-average particle size (nm) |  | 580 | 360 | 330 | 320 | 150 | 220 |
|  |  | Graft ratio (%) |  | 47 | 53 | 53 | 53 | 52 | 53 |
| Thermoplastic resin composition | Evaluation results | Charpy impact value (kJ/m$^2$) | 23°C | 7 | 10 | 9 | 8 | 6 | 7 |
|  |  |  | -30°C | 2 | 3 | 3 | 2 | 2 | 2 |
|  |  | MVR (cm$^3$/10min) |  | 28 | 25 | 24 | 24 | 18 | 22 |
|  |  | Molded article appearance |  | B | A | B | B | A | A |
|  |  | Weather resistance |  | B | A | A | B | A | A |

[Table 2]

<Table 2A>

| | | | Examples | | | | | |
|---|---|---|---|---|---|---|---|---|
| | | | I-7 | I-8 | I-9 | I-10 | I-11 | I-12 |
| Rubbery polymer (A) | | | A-7 | A-8 | A-9 | A-10 | A-11 | A-12 |
| Rubbery polymer (A) | Raw material formulation (part) | Alkyl (meth)acrylate | BA | 97.6 | 97.6 | 97.6 | 97.6 | 97.6 | 99.5 |
| | | Crosslinking agent (1) | UH-100 | 2.0 | 2.0 | 2.0 | 2.0 | 2.0 | 0.1 |
| | | | PBOM | | | | | | |
| | | Other vinyl compound | AMA | 0.4 | 0.4 | 0.4 | 0.4 | 0.4 | 0.4 |
| | | Hydrophobic substance | LP | 2.0 | 2.0 | 2.0 | 2.0 | 2.0 | 2.0 |
| | | Emulsifier | ASK | 0.5 | 0.15 | 0.1 | 0.05 | 0.03 | 1.0 |
| | Evaluation results | Aggregate content (%) | | 0.1 | 0.2 | 0.5 | 0.6 | 1.1 | 0.1 |
| | | Volume-average particle size (X) (nm) | | 230 | 390 | 450 | 600 | 880 | 310 |
| | | Frequency upper limit 10%-volume particle size (Y) (nm) | | 340 | 660 | 700 | 1030 | 1940 | 500 |
| | | Frequency lower limit 10%-volume particle size (Z) (nm) | | 120 | 200 | 230 | 250 | 320 | 180 |
| | | Degree of swelling by acetone (%) | | 760 | 780 | 800 | 830 | 1300 | 1150 |
| | | Gel content (%) | | 96 | 96 | 92 | 90 | 81 | 82 |

<Table 2B>

| | | | | Examples | | | | | |
|---|---|---|---|---|---|---|---|---|---|
| | | | | II-7 | II-8 | II-9 | II-10 | II-11 | II-12 |
| Graft copolymer (B) | | | | B-7 | B-8 | B-9 | B-10 | B-11 | B-12 |
| Graft copolymer (B) | Raw material formulation (part) | Rubbery polymer (A) | | 50 | 50 | 50 | 50 | 50 | 50 |
| | | Aromatic vinyl | ST | 37.5 | 37.5 | 37.5 | 37.5 | 37.5 | 37.5 |
| | | Vinyl cyanide | AN | 12.5 | 12.5 | 12.5 | 12.5 | 12.5 | 12.5 |
| | Evaluation results | Aggregate content (%) | | 0.1 | 0.2 | 0.5 | 0.8 | 1.3 | 0.1 |
| | | Volume-average particle size (nm) | | 270 | 430 | 480 | 620 | 890 | 350 |
| | | Graft ratio (%) | | 53 | 52 | 51 | 49 | 50 | 53 |
| Thermoplastic resin composition | Evaluation results | Charpy impact value (kJ/m$^2$) | 23°C | 8 | 10 | 9 | 7 | 6 | 7 |
| | | | -30°C | 2 | 3 | 2 | 2 | 2 | 2 |
| | | MVR (cm$^3$/10min) | | 24 | 27 | 29 | 31 | 33 | 30 |
| | | Molded article appearance | | A | A | B | B | C | B |
| | | Weather resistance | | A | A | B | B | C | A |

[Table 3]

<Table 3A>

| | | | | I-13 | I-14 | I-15 | I-16 | I-17 |
|---|---|---|---|---|---|---|---|---|
| | | Rubbery polymer (A) | | A-13 | A-14 | A-15 | A-16 | A-17 |
| Rubbery polymer (A) | Raw material formulation (part) | Alkyl (meth)acrylate | BA | 99.1 | 98.6 | 94.6 | 89.6 | 97.6 |
| | | Crosslinking agent (1) | UH-100 | 0.5 | 1.0 | 5.0 | 10 | |
| | | | PBOM | | | | | 2.0 |
| | | Other vinyl compound | AMA | 0.4 | 0.4 | 0.4 | 0.4 | 0.4 |
| | | Hydrophobic substance | LP | 2.0 | 2.0 | 2.0 | 2.0 | 2.0 |
| | | Emulsifier | ASK | 1.0 | 1.0 | 1.0 | 1.0 | 0.2 |
| | Evaluation results | Aggregate content (%) | | 0.1 | 0.1 | 0.1 | 0.1 | 0.1 |
| | | Volume-average particle size (X) (nm) | | 300 | 300 | 270 | 260 | 280 |
| | | Frequency upper limit 10%-volume particle size (Y) (nm) | | 470 | 450 | 370 | 350 | 500 |
| | | Frequency lower limit 10%-volume particle size (Z) (nm) | | 180 | 200 | 210 | 220 | 180 |
| | | Degree of swelling by acetone (%) | | 1050 | 930 | 650 | 530 | 710 |
| | | Gel content (%) | | 86 | 89 | 97 | 99 | 97 |

<Table 3B>

| | | | | Examples | | | | |
|---|---|---|---|---|---|---|---|---|
| | | | | II-13 | II-14 | II-15 | II-16 | II-17 |
| Graft copolymer (B) | | | | B-13 | B-14 | B-15 | B-16 | B-17 |
| Graft copolymer (B) | Raw material formulation (part) | Rubbery polymer (A) | | 50 | 50 | 50 | 50 | 50 |
| | | Aromatic vinyl | ST | 37.5 | 37.5 | 37.5 | 37.5 | 37.5 |
| | | Vinyl cyanide | AN | 12.5 | 12.5 | 12.5 | 12.5 | 12.5 |
| | Evaluation results | Aggregate content (%) | | 0.1 | 0.1 | 0.1 | 0.1 | 0.1 |
| | | Volume-average particle size (nm) | | 340 | 350 | 310 | 300 | 320 |
| | | Graft ratio (%) | | 53 | 53 | 53 | 53 | 53 |
| Thermoplastic resin composition | Evaluation results | Charpy impact value (kJ/m$^2$) | 23°C | 8 | 9 | 9 | 7 | 10 |
| | | | -30°C | 2 | 2 | 2 | 2 | 2 |
| | | MVR (cm$^3$/10min) | | 28 | 26 | 23 | 21 | 24 |
| | | Molded article appearance | | B | B | B | B | A |
| | | Weather resistance | | A | A | A | B | A |

[Table 4]

<Table 4A>

| | | | | Comparative examples | | | |
|---|---|---|---|---|---|---|---|
| | | | | I-1 | I-2 | I-3 | I-4 |
| Rubbery polymer (A) | | | | A-18 | A-19 | A-20 | A-21 |
| Rubbery polymer (A) | Raw material formulation (part) | Alkyl (meth)acrylate | BA | 97.6 | 97.6 | 99.55 | 97.6 |
| | | Crosslinking agent (1) | UH-100 | 2.0 | 2.0 | 0.05 | 2.0 |
| | | | PBOM | | | | |
| | | Other vinyl compound | AMA | 0.4 | 0.4 | 0.4 | 0.4 |
| | | Hydrophobic substance | LP | 0.05 | 12 | 2.0 | |
| | | Emulsifier | ASK | 0.2 | 0.2 | 0.2 | 1.0 |
| | Evaluation results | Aggregate content (%) | | 3.7 | 0.1 | 0.1 | 0.5 |
| | | Volume-average particle size (X) (nm) | | 840 | 270 | 320 | 270 |
| | | Frequency upper limit 10%-volume particle size (Y) (nm) | | 1800 | 360 | 540 | 460 |
| | | Frequency lower limit 10%-volume particle size (Z) (nm) | | 300 | 160 | 150 | 100 |
| | | Degree of swelling by acetone (%) | | 1600 | 760 | 1230 | 1350 |
| | | Gel content (%) | | 78 | 96 | 67 | 65 |

<Table 4B>

| | | | | | Comparative examples | | | |
|---|---|---|---|---|---|---|---|---|
| | | | | | II-1 | II-2 | II-3 | II-4 |
| Graft copolymer (B) | | | | | B-18 | B-19 | B-20 | B-21 |
| Graft copolymer (B) | Raw material formulation (part) | | Rubbery polymer (A) | | 50 | 50 | 50 | 50 |
| | | | Aromatic vinyl | ST | 37.5 | 37.5 | 37.5 | 37.5 |
| | | | Vinyl cyanide | AN | 12.5 | 12.5 | 12.5 | 12.5 |
| | Evaluation results | | Aggregate content (%) | | 2.1 | 0.1 | 0.1 | 0.3 |
| | | | Volume-average particle size (nm) | | 850 | 300 | 360 | 290 |
| | | | Graft ratio (%) | | 45 | 52 | 53 | 48 |
| Thermoplastic resin composition | Evaluation results | | Charpy impact value (kJ/m$^2$) | 23°C | 5 | 7 | 5 | 5 |
| | | | | -30°C | 1 | 2 | 1 | 2 |
| | | | MVR (cm$^3$/10min) | | 33 | 24 | 32 | 13 |
| | | | Molded article appearance | | D | D | D | A |
| | | | Weather resistance | | C | D | A | A |

The results obtained in Examples and Comparative examples revealed the following facts.

Since the aggregate contents in the graft copolymers (B) prepared in Examples II-1 to 11-17 were low, the thermoplastic resin compositions produced using the graft copolymers (B) were excellent in terms of impact resistance, low-temperature impact resistance, flowability (moldability), the appearance of a molded article, and weather resistance.

Each of the graft copolymers prepared in Comparative examples II-1 to II-4 was evaluated as poor in terms of any of the following items: aggregate content after polymerization and the impact resistance, low-temperature impact resistance, flowability (moldability), molded article appearance, and weather resistance of a thermoplastic resin composition produced using the graft copolymer.

In Comparative examples II-1 and II-2, where the amount of the hydrophobic substance used in the production of the rubbery polymer was outside the range of the present invention, the miniemulsion was not formed in a sufficient manner and a large amount of aggregates were formed due to the coarse particles after polymerization. Thus, productivity was poor. The aggregates also degraded the appearance and weather resistance of the resulting molded article.

In Comparative example II-3, where the gel content in the rubbery polymer was outside the range of the present invention, impact resistance, low-temperature impact resistance, and the appearance of the molded article were poor. In Comparative example II-4, where the gel content in the rubbery polymer was outside the range of the present invention, impact resistance was poor. Furthermore, since small particles were formed, the frequency lower limit 10%-volume particle size (Z) was small and flowability was poor.

Industrial Applicability

The thermoplastic resin composition according to the present invention, which contains the graft copolymer (B) according to the present invention produced using the rubbery polymer (A) according to the present invention, has excellent moldability. A molded article produced by molding the thermoplastic resin composition according to the present invention has good impact resistance, good low-temperature impact resistance, good appearance, and good weather resistance. This molded article achieves good impact resistance, good appearance, and good weather resistance in a far superior manner than molded articles produced using the thermoplastic resin compositions known in the related art.

The thermoplastic resin composition according to the present invention and a molded article produced by molding the thermoplastic resin composition are valuable as various types of industrial materials.

Although the present invention has been described in detail with reference to particular embodiments, it is apparent to a person skilled in the art that various modifications can be made therein without departing from the spirit and scope of the present invention.

The present application is based on Japanese Patent Application No. 2017-009602 filed on January 23, 2017, which is incorporated herein by reference in its entirety.

**Claims**

1. A rubbery polymer (A) that is a product of polymerization of a raw material mixture containing an alkyl (meth)acrylate, a crosslinking agent represented by Formula (1) below (hereinafter, this crosslinking agent is referred to as "crosslinking agent (1)"), and a hydrophobic substance, the amount of the hydrophobic substance being 0.1 to 10 parts by mass relative to 100 parts by mass of the total amount of the alkyl (meth)acrylate and the crosslinking agent (1), the rubbery polymer (A) having a gel content of 80% to 100%,

$$CH_2=CR^1-CO-(X)-COCR^1=CH_2 \dots \qquad (1)$$

wherein, in Formula (1), X represents at least one diol residue selected from a polyalkylene glycol residue, a polyester diol residue, and a polycarbonate diol residue; and $R^1$ represents H or $CH_3$.

2. The rubbery polymer (A) according to Claim 1, the rubbery polymer (A) having a volume-average particle size of 150 to 800 nm and a degree of swelling by acetone of 500% to 1200%.

3. The rubbery polymer (A) according to Claim 1 or 2, the rubbery polymer (A) being a product of polymerization of a miniemulsion containing the alkyl (meth)acrylate, the crosslinking agent, the hydrophobic substance, an oil-soluble initiator, an emulsifier, and water.

4. A graft copolymer (B) that is a product of graft polymerization of at least one vinyl monomer (b) selected from the group consisting of an aromatic vinyl, an alkyl (meth)acrylate, and a vinyl cyanide onto the rubbery polymer (A) according to any one of Claims 1 to 3.

5. A thermoplastic resin composition comprising the graft copolymer (B) according to Claim 4.

6. A molded article produced by molding the thermoplastic resin composition according to Claim 5.

7. A method for producing a rubbery polymer (A), the method comprising polymerizing a raw material mixture containing an alkyl (meth)acrylate, a crosslinking agent (1) represented by Formula (1) below, and a hydrophobic substance in order to produce a rubbery polymer (A) having a gel content of 80% to 100%, the amount of the hydrophobic substance being 0.1 to 10 parts by mass relative to 100 parts by mass of the total amount of the alkyl (meth)acrylate and the crosslinking agent (1),

$$CH_2=CR^1-CO-(X)-COCR^1=CH_2 \dots \qquad (1)$$

wherein, in Formula (1), X represents at least one diol residue selected from a polyalkylene glycol residue, a polyester diol residue, and a polycarbonate diol residue; and $R^1$ represents H or $CH_3$.

8. The method for producing a rubbery polymer (A) according to Claim 7, wherein the rubbery polymer (A) has a volume-average particle size of 150 to 800 nm and a degree of swelling by acetone of 500% to 1200%.

9. The method for producing a rubbery polymer (A) according to Claim 7 or 8, wherein a mixture containing the alkyl (meth)acrylate, the crosslinking agent, the hydrophobic substance, an oil-soluble initiator, an emulsifier, and water is formed into a miniemulsion, and the miniemulsion is polymerized to form a rubbery polymer (A).

10. A method for producing a graft copolymer (B), the method comprising graft-polymerizing at least one vinyl monomer (b) selected from the group consisting of an aromatic vinyl, an alkyl (meth)acrylate, and a vinyl cyanide onto a rubbery polymer (A) produced by the production method according to any one of Claims 7 to 9 in order to form a graft copolymer (B).

11. A method for producing a thermoplastic resin composition, the method comprising using the graft copolymer (B) produced by the production method according to Claim 10.

12. A method for producing a molded article, the method comprising molding the thermoplastic resin composition produced by the production method according to Claim 11.

**INTERNATIONAL SEARCH REPORT**

International application No.

PCT/JP2018/000993

A. CLASSIFICATION OF SUBJECT MATTER
Int.Cl. C08F2/44(2006.01)i, C08F265/04(2006.01)i, C08F289/00(2006.01)i

According to International Patent Classification (IPC) or to both national classification and IPC

B. FIELDS SEARCHED

Minimum documentation searched (classification system followed by classification symbols)
Int.Cl. C08F2/44, C08F265/04, C08F289/00

Documentation searched other than minimum documentation to the extent that such documents are included in the fields searched
Published examined utility model applications of Japan       1922–1996
Published unexamined utility model applications of Japan     1971–2018
Registered utility model specifications of Japan             1996–2018
Published registered utility model applications of Japan      1994–2018

Electronic data base consulted during the international search (name of data base and, where practicable, search terms used)
CA/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 2008-101119 A (JSP CO., LTD.) 01 May 2008, claims, examples (Family: none) | 1–12 |
| A | JP 53-014788 A (TOA-GOSEI CHEMICAL INDUSTRY CO., LTD.) 09 February 1978, claims, examples (Family: none) | 1–12 |
| A | WO 2008/108390 A1 (UBE INDUSTRIES, LTD.) 12 September 2008, claims, examples & JP 2013-227584 A & JP 2013-231187 A | 1–12 |
| A | JP 2011-526637 A (BASF SE.) 13 October 2011, claims, examples & US 2011/0105660 A1, claims, examples & WO 2010/000833 A1 & EP 2297242 A1 & CN 102099413 A & MX 2011000007 A & BR PI0914100 A | 1–12 |
| P, A | WO 2017/030041 A1 (OSAKA GAS CHEMICALS CO., LTD.) 23 February 2017, claims & JP 2017-160450 A & TW 201713408 A | 1–12 |
| P, A | WO 2017/126545 A1 (UMG ABS, LTD.) 27 July 2017, claims, examples (Family: none) | 1–12 |

☐ Further documents are listed in the continuation of Box C.     ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
09 April 2018 (09.04.2018)

Date of mailing of the international search report
17 April 2018 (17.04.2018)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012144714 A
- JP 5905115 B
- JP 2017009602 A